# EUROPEAN PATENT APPLICATION

(11) **EP 4 831 679 A1**
(43) Date of publication of application: **28.10.2026**
(21) Application number: 25171895.3
(22) Date of filing: 23.04.2025
(51) Int. Cl.: G01S 7/00, H04B 7/06, H04W 52/02, H04W 52/04

(54) **ADAPTIVE BEAMFORMING FOR INTEGRATED SENSING AND COMMUNICATION SYSTEMS**

(71) Applicant: Vestel Elektronik Sanayi ve Ticaret A.S., 45030 Manisa (TR)
(72) Inventor: ÖZBEK, Berna, 35430 Izmir (TR); YILMAZ, Saadet Simay, 35430 Izmir (TR)
(74) Representative: Grünecker Patent- und Rechtsanwälte PartG mbB

(57) **Abstract**

The present disclosure relates to methods and apparatuses for determining adaptively the number of sensing beams in a joint communication and sensing access point (base station). A communication beam is obtained for a communication device according to location of the communication device. The transmit power for the communication user is obtained. The power available for sensing is then determined, and it is not greater than a difference between the power available at the access point and power of the communication beam. Then, a number of sensing beams is determined while sharing the power available for sensing; and the sensing beams are allocated correspondingly.

## Description

The present disclosure relates generally to integrated sensing and communication and specifically to methods and apparatuses supporting the integrated sensing and communication.

### BACKGROUND

The integration of sensing functionality is emerging as a desired feature for future wireless radio access technologies such as beyond fifth generation (5G), sixth generation (6G), and Institute for Electrical and Electronics Engineers, IEEE, 802.11bf.

One possible approach for this goal is to utilize a communication waveform for dual functionalities of communication and radar-sensing performance. Recent research has explored the potential of Integrated Sensing and Communication (ISAC) across different approaches, including multi-antenna beamforming, waveform design, resource allocation and the like. Among these approaches, multi-antenna beamforming stands out, as it enables multiple signal-carrying beams to be directed toward both communication devices and sensing targets. ISAC can be achieved by leveraging the spatial dimensions of multi-antenna base stations (BSs), where a BS transmits beamformed signals decoded by communication devices and also reflected back to the BS by sensing targets. This approach supports simultaneous multi-user communications and multi-target radar sensing, possibly within the same frequency band. To perform both functions efficiently with shared spatial and power resources at the BS, an efficient beamforming design within the ISAC framework would be desirable.

ISAC has been recognized as one of the technologies that may be relevant for beyond 5^{th} generation (B5G) and 6^{th} generation (6G) wireless communication services that require sensing the environment, such as supporting autonomous vehicles, intelligent traffic monitoring, environmental monitoring, enhanced localization and tracking, and the Internet of Things (IoT) in 6G wireless networks. ISAC integrates sensing and communication functions into a joint design to exploit their mutual benefit via seamless collaboration and to optimize the use of wireless resources. In ISAC, a single transmission serves to deliver information to communication devices while simultaneously detecting targets. By enabling the shared use of a unified spectrum, waveforms, hardware (e.g., antenna and radio frequency front-end), and signal processing framework for both radar and communication functions, ISAC may facilitate mitigation of spectrum scarcity and enhance spectral efficiency and energy efficiency (EE).

Through co-design, ISAC may provide communication-assisted sensing and/or sensing-assisted communication.

On the other hand, rising demand for data traffic and communication services has led to a sharp increase in energy consumption within wireless networks in recent years. This growth may not only raise the costs associated with devices and infrastructure but also introduce environmental and health concerns in daily life. At the same time, transmission power significantly affects the maximum sensing range. For instance, when the target device or motion is far from the receiver, the sensing, detection, or tracking performance may fall below acceptable levels. As a result, higher transmission power might be preferred. However, increased transmission power can lead to greater interference and increased energy consumption, presenting a trade-off. Considering these concerns, maximizing energy efficiency may be desirable, involving balancing the trade-off between total power consumption and the users' sum rate.

### SUMMARY

Methods and techniques are described herein for facilitating integrated sensing and communication taking into account energy efficiency.

The invention is defined by the independent claims. Some exemplary implementations are provided by the dependent claims.

For example, a method is provided for determining adaptively the number of sensing beams in a joint communication and sensing base station. The method comprises a step of obtaining one or more communication beam(s) for respective one or more communication device(s) according to one or more location(s) of the respective one or more communication device(s) and a step of obtaining available transmit power(s). The method further comprises determining power available for sensing which is not greater than a difference between the available transmit power and power of the communication beam(s) and determining a number of sensing beams while sharing the power available for sensing, as well as a step of determining the sensing beams.

Further methods, apparatuses, and programs are provided as is described herein.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter. As used in the specification and the claims, the singular form of "a," "an," and "the" include plural referents unless the context clearly dictates otherwise.

### BRIEF DESCRIPTION OF DRAWINGS

An understanding of the nature and advantages of various embodiments may be realized by reference to the following figures.
- FIG. 1: is a block diagram illustrating a communication and/or sensing system with a transmitter and a receiver.
- FIG. 2: is a block diagram illustrating exemplary devices and signals exchanged between them in an integrated sensing and communication system.
- FIG. 3: is a flow diagram illustrating an exemplary method for generating beams in an integrated sensing and communication system.
- FIG. 4: is a schematic drawing illustrating an exemplary scenario of sensing and communication in an integrated sensing and communication system.
- FIG. 5: is a block diagram illustrating distribution of the sensing beams with angle *θₘ* to m-th respective possible target directions for radar sensing.
- FIG. 6: is a block diagram illustrating an exemplary functional structure of a memory module of the access point.
- FIG. 7: is a block diagram illustrating an exemplary functional structure of a memory module of the access point.

Like reference numbers and symbols in the various figures indicate like elements, in accordance with certain example implementations.

### DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

### Communication and sensing system

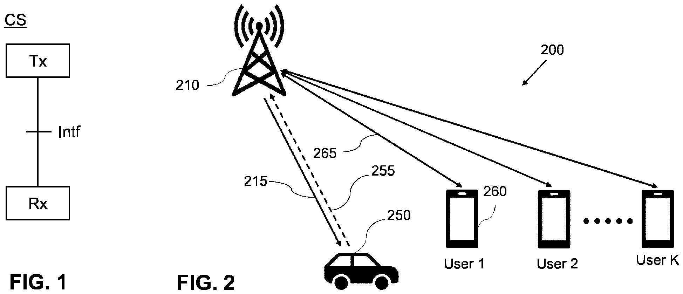

Fig. 1 illustrates an exemplary communications system CS in which Tx represents a transmitter and Rx represents a receiver of a wireless signal. The transmitter Tx is capable of transmitting a signal to the receiver Rx or to a group of receivers or to broadcast a signal over an interface Intf. The interface Intf may be for example any wireless interface. The interface Intf may be specified by means of resources, which can be used for the transmission and reception by the transmitter Tx and the receiver Rx. Such resources may be defined in one or more (or all) of the time domain, frequency domain, code domain, and space domain (e.g. beams). It is noted that in general, the transmitter Tx and receiver Rx may be also both integrated into the same device Tx+Rx. In other words, the devices Tx and Rx in Fig. 1 may respectively also include the functionality of the Rx and Tx.

The present disclosure is not limited to any particular transmitter Tx, receiver Rx and/or interface Intf implementation. However, it may be applied readily to some existing communication systems as well as to the extensions of such systems, or to new communication systems. Exemplary existing communication systems may be, for instance the 5G New Radio (NR) in its current or future releases, 6G systems, and/or the IEEE 802.11 based systems (referred to as WiFi) such as the recently studied IEEE 802.11be or the broadly employed IEEE 802.11ac, IEEE 802.11ax, or IEEE 802.11ay or the like. Moreover, the transmitter and/or the receiver may support precoding and beamforming. For example, the interface Intf may be a MIMO interface. One transmitter and/or receiver may communicate with a plurality of other transmitters/receivers and may be implemented in a MU-MIMO setup in uplink and/or downlink.

Correspondingly, in the present disclosure, the term base station is not limited to a base station of a cellular telecommunications network such as an eNB in the Long Term Evolution (LTE) of the 4^{th} generation (4G) or a gNB in the New Radio (NR) of the 5^{th} generation (5G) or the like. Rather, the term base station denotes any node that enables wireless access to one or more stations that may themselves be base stations or user equipment (UE). For example, an access point of a Wi-Fi standard is also understood as a base station. A base station may include capability of connecting UEs to a network. For example, in 4G and 5G, a base station connects UEs to a 4G or 5G core network and in Wi-Fi standards, the access point may connect UEs (STAs) to internet.

When referring to a STA or user or a user station, the terms are not limited to devices supporting Wi-Fi. Rather, the term comprises more generally user equipment of any kind, such as the user equipment (UE) defined within the 3GPP framework or any terminal device capable of wireless communication. The transmitter Tx and the receiver Rx may be an access point and a STA respectively in downlink. Although Fig. 1 shows a simplified communication system with one transmitter and one receiver, the present disclosure is applicable to systems in which there are multiple transmitters and receivers communicating with each other in uplink (UE to BS) or downlink (BS to UE).

An exemplary system 200 including a plurality of devices that may implement communication and sensing capabilities is shown in Fig. 2. The system 200 includes a base station 210 which integrates an ISAC transceiver capable of communication and of sensing. It is noted that the ISAC framework is sometimes referred to as joint sensing and communication (JSAC) or given other names. Communication in the system 200 may be performed as described with reference to Fig. 1. When referring to sensing, what is meant is receiving a signal reflected from a sensing target. Such receiving comprises processing for detecting the sensing signal in the received signal and, possibly, estimating a location of the sensing target accordingly.

In the ISAC system 200, there are further one or more communication devices. Fig. 2 illustrates K communication devices and denotes a communication device with reference sign 260. The base station 210 communicates with each communication device 260 with a signal 265 in uplink and/or downlink. For example, the base station 210 is capable of communicating with each communication device 260 via a standardized interface such as LTE, NR, or WiFi or the like. Moreover, the base station 210 is capable of sensing a sensing target 250. Specifically, the base station 210 transmits a sensing beam 215. The sensing beam 215 arrives at the sensing target 250 and at least part 255 of the sensing beam 215 is reflected on the sensing target 250 back to the base station 210. The base station is capable of detecting the reflected beam 255 and determining based thereon the location of the sensing target 250. For example, based on the angle of arrival of the reflected beam 255, the base station may determine the angle towards the location of the sensing target. Based on the received signal strength and / or signal phase, the range (distance to the sensing target) may be determined. Moreover, the base station may determine (e.g. based on the Doppler shift) velocity of the sensing target. Techniques for such sensing are well known to a skilled person in the field, including e.g. Frequency-Modulated Continuous Wave (FMCW) radar, Multiple-Input Multiple-Output (MIMO) radar, deconvolution-based methods such as Wiener filtering and Richardson-Lucy algorithms, sparse regularization techniques like the Split Bregman algorithm, and deep learning-based approaches such as UNet and adversarial networks for radar super-resolution.

In Fig. 2, the sensing target 250 is illustrated as a car, but it is noted that the sensing target may be any kind of vehicle or any other object that reflects the sensing beam. In Fig. 2, there is one sensing target illustrated and K communication devices. However, the present disclosure is not limited to such scenario. In general, there may be J sensing targets and K users, with J being an integer larger than 0 and K being an integer larger than zero. It is further noted that sensing targets and communication devices may be co-located in practise, e.g. a user with a mobile device driving a car or the like. It is advantageous for a base station to comprise more than one antennas in order to perform the sensing and the communication. For example, the base station 210 may comprise an array or a matrix of transmission and/or reception antennas. Thus, in general, the base station may have multiple antennas. The communication devices 260 may have one or more antennas.

Regarding limitations, in most applications, power to be used for transmission may be limited. On the other hand, a relatively high-power main beams may be necessary for target detection to ensure high quality sensing and/or cover a certain range (distance). One of the applications of the ISAC may be for instance 6^{th} generation (6G) applications such as autonomous driving in vehicle-to-everything (V2X) communications, vehicle-to-infrastructure (V2I) networks, connected automated vehicles (CAVs), smart traffic management, augmented/ virtual reality (AR/VR), smart homes, unmanned aerial vehicles (UAVs), and industrial automation. The demand for systems that can provide both high data rate communication and accurate sensing (or localization) services has been increasing. On the other hand, with the rapid expansion of wireless devices, the wireless spectrum is becoming an increasingly valuable resource. Therefore, methods are needed for utilizing higher-frequency spectrum bands, such as millimeter wave bands, or for reusing/sharing spectrum used for other applications and systems, such as radar technology. In addition, the communication spectrum in next-generation mobile networks is shifting toward the millimeter-wave band, which will overlap with the traditional sensing spectrum. The sensing and communication systems are advancing toward higher frequency bands and larger antenna arrays, leading to notable similarities in hardware architecture and signal processing techniques. As wireless communication devices with sensing capabilities continue to evolve, the competition for spectrum resources between radar and communication systems becomes more highlighted, emphasizing the need for efficient spectrum management solutions.

As mentioned above, beamforming design within the ISAC frameworks has been researched and many approaches have been proposed, such as joint optimization of transmit information and sensing beamforming at the BS, taking into account various optimization objectives. There have been sensing-centric designs, as well as communication-centric designs. It is noted that some sensing targets can be potential eavesdroppers (Eves) that could attempt to intercept messages transmitted by the communication part of the ISAC system. In addition to that, in realistic scenarios, the locations of targets and/or of potential Eves may be unknown. Motivated by the above mentioned EE, for unknown locations of sensing targets and/or potential Eves, using the maximum number of dedicated and sensing beams in the transmitted ISAC signal as in the conventional scheme can generate interference to the communication devices and consume power. In addition, it may be desirable to sense the sensing targets and/or potential Eves especially around the communication device(s), since the sensing targets and/or potential Eves close to the communication devices may reduce the secrecy rate.

In the present disclosure, an ISAC system is provided with a communication-centric design that aims at increasing energy efficiency while sensing potential targets around the communication device(s). In particular, an adaptive approach is provided which takes into account how many dedicated and sensing beams are needed in an ISAC system considering power allocation. One aim is to detect the potential Eves, especially those located in the proximity of a communication device, since the closer the potential Eves are to the communication users (CUs), the better can they intercept information, resulting in reduction of the secrecy rate. When using a maximum number of dedicated and sensing beams in the transmitted ISAC signal as in conventional schemes makes it difficult to detect the targets around the communication device(s). Moreover, it can cause an interference to the communication device(s), or can consume high amount of power for sensing. In the presence disclosure, an aim is to improve the balance between the communication and sensing in this regard.

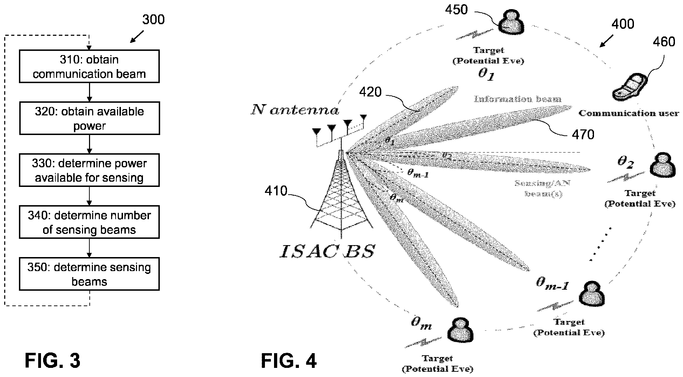

Fig. 3 is a flow chart of an exemplary method 300 for determining adaptively the number of sensing beams in a joint communication and sensing access point (also denoted as an ISAC access point). As mentioned above, the terms access point and base station are used interchangeably herein unless stated otherwise, so that the ISAC access point here may for instance, a WiFi AP or a NS of a 4G, 5G, or 6G system, or the like.

The method 300 comprises a step of obtaining 310 a communication beam for a communication device according to the location of the communication device. The obtaining of the communication beam may comprise obtaining of a power and/or an angle for the communication beam that are sufficient to perform communication with the communication device (uplink and/or downlink) with a predetermined target quality. For example, the location and the angle of the communication device(s) can be obtained by channel estimation techniques and beam tracking techniques.

When reference is made to "a communication device", it is noted that there may be one or more of the communication devices. In other words, the term "a" in this expression may be replaced by "one or more" as is usual. For instance in step 310, communication beams may be determined for more than one respective communication devices. For this purpose, any known approach may be use. One specific example is zero-forcing.

The method 300 further comprises the steps of obtaining 320 transmit power (available transmit power and determining 330 power available for sensing which is not greater than a difference between the available transmit power and power of the communication beam. For example, the power available for sensing (referred to as total sensing power) may be equal to the difference between the available transmit power and power of the communication beam. However, in some exemplary implementations, there may be a power margin, so that the total sensing power is determined (calculated) by subtracting from the available transmit power the power of the communication beam and the power margin. Step 330 corresponds to the communication-centric design, as the total sensing power is determined as a remaining power after the available transmit power is reduced by what is necessary for the communication (without trade-off between the communication and the sensing).

It is noted that when referring to the power of the communication beam, in case of there are more than one beams, the power available for sensing is not greater than a difference between the available transmit power and power of the corresponding plural communication beams (sum of powers of the respective communication beams).

When referring to available power, what is meant is power available to both communication and sensing at the access point (base station). The total power may be predefined. For instance, it may be limited by the construction of the access point and/or by legislation and/or by industry standard or the like. For instance, in some standards, the available power may be the total power available for transmission at a base station which may be 30dB. However, this is only an example and for different systems (cellular, WLAN, WPAN etc), the available power may bave a different value. Out of the total power, the required transmit power for the communication beam (or plural communication beams) at the access point is determined based on the user requirements such as quality of service, signal-to-noise ratio (SNR), data rate, etc.

The method 300 further comprises a step of determining 340 a number of sensing beams while sharing the power available for sensing. Thus, the number of sensing beams is determined so that the sensing beams can be accommodated in the portion of power that remains after accommodating the communication beam. For example, the determining of the number of sensing beams is performed according to the power available for sensing and a distance from the access point to the location of the communication device. As mentioned above, the required transmit power of the communication device(s) is obtained beforehand. In addition to that, the location of the communication device(s) is known. Then, by using the information on both the location and the required transmit power, the range of the sensing beams can be computed. After that, the number of sensing beams can be calculated. It is noted that the location of the sensing target(s) does not need to be known. After determining the number (amount) of sensing beams, the method 300 proceeds to the step of determining 350 the sensing beams. The determining of the sensing beams comprises determining of the power and the direction of the beam, e.g. by determining the beam pattern applied at the access point.

Fig. 4 illustrates an exemplary system model 400. In this example, an ISAC downlink system is shown in which a base station 410, equipped with multiple antennas (e.g. an N-element uniform linear array (ULA)), simultaneously performs transmission to one communication device 460 and radar target sensing by sending integrated signals. In the system, the sensing signal may be reflected for instance by sensing targets 450 that can be potential Eves around the communication device. The m sensing targets in this exemplary illustration are placed in angles *θ₁*, *θ₂*, ..., *θₘ.* The angles are determined relative to the angle of departure *θ₀* of a Line of Sight (LoS) beam to the communication device. It is noted that in case there are multiple communication devices, the angles may be determined relative to the minimum and maximum of the angle of departure *θ_{0,k}* among K devices (k=0...K). However, this is only an example, and another convention may be set up.

The transmitted signal vector is designed as a joint (integrated) signal for communication and sensing. It can be represented as follows $x = w s + {\sum }_{j = 1}^{J} {v}_{j} {s}_{j} ,$ where $w ∈ {ℂ}^{N \times 1}$ denotes the information beamforming vector such that ∥***w***∥² *= P_{CU}*, where *P_{CU}* is the transmit power of the CU and s is the information symbol for the communication device, such that $E \left[{\left|s\right|}^{2}\right] = 1$. Vector ${v}_{j} ∈ {ℂ}^{N \times 1}$ gives the j*^{th}* radar beamforming vector such that ${\sum }_{j = 1}^{J} {\left‖{v}_{j}\right‖}^{2} = P$, where P denotes the total transmit power of sensing targets, and *sⱼ* is the j*^{th}* independent radar signal and $E \left[{\left|{s}_{j}\right|}^{2}\right] = 1$, which is independent of s, and *J < N -* 1*.* N is the maximum number of beams that the access point (base station 410) may simultaneously transmit. The present disclosure is not limited to any specific radar signal. Known radars typically send a pseudo-random sequence with high autocorrelation or chirps (signal with increasing or decreasing frequency) or the like in order to improve recognition of the received reflected signal.

The dedicated signals *sⱼ* are used to facilitate the target sensing and/or to confuse the eavesdropping targets. These signals may enhance performance by allowing an additional degree of freedom for sensing. Since the exact location of the targets/potential Eves 450 is generally not known, the transmission beamforming design aims to support multiple possible values of the range of possible target locations around the communication device. Thus, in addition to the existing communication beams, dedicated sensing beams may be useful at the transmitter to enable the sensing of multiple possible values of the range of possible target locations around the communication device and to enhance design flexibility, particularly when the number of available communication beams is limited. However, additional sensing beams will also generate interference to the communication device, thus leading to a trade-off between the communication and the sensing. In conventional systems, the number of dedicated and sensing beams can be at most *N* (number of BS antennas). In an exemplary embodiment, an adaptive number of dedicated and sensing beams is provided based on the location of the communication device (UE). The adaptive number of sensing beams is denoted *J*_{adaptive}.

Thus, the transmitted signal vector can be rewritten as $x = w s + {\sum }_{j = 1}^{{J}_{adaptive}} {v}_{j} {s}_{j} .$

The number of beams may thus be regularly adapted to the current state of the system 400, i.e. number of communication devices, their location, etc. Such adaption may be performed periodically. However, in some scenarios, an aperiodic adaption may be more suitable. For example, the adaption may take place in case the location and/or number of the communication devices changes significantly. For instance, the adaption may be performed when the number of communication devices changes and/or when the location of the user changes by a predefined threshold angle.

A mmWave (millimeter wave) channel vector from the BS 410 to the communication device 460, according to N. Su, F. Liu, and C. Masouros, "Secure integrated sensing and communication systems with the assistance of sensing functionality," in 31st EUSIPCO, 2023, pp. 690-694*,* can be denoted by $h ∈ {ℂ}^{N \times 1}$ and is defined as $h = \sqrt{PL} \sqrt{N} \left(\sqrt{\frac{v}{v + 1}}{h}_{L}^{LoS}+\sqrt{\frac{1}{v + 1}}{h}_{S}^{NLoS}\right) ,$ where *PL* denotes the large-scale fading factor (pathloss). Symbol *v >* 0 is the Rician K-factor of the communication device. Rician K-factor specifies the ratio of the powers of the LoS component to the diffuse component, which measures the relative strength of the LoS component. In other words, the Rician K-factor may be used as a measure of the link quality. ${h}_{L}^{LoS} = a \left({θ}_{0}\right)$ is the Line of Sight (LoS) deterministic component. Vector ***a***(*θ*₀) denotes the array steering vector, where ${θ}_{0} ∈ \left[-\frac{π}{2},\frac{π}{2}\right]$ is the angle of departure (AoD) of the LoS component from the BS to the communication device. The scattering (Non-Line-of-Sight, NLoS) component ${h}_{S}^{NLoS}$ can be expressed as ${h}_{S}^{NLoS} = \sqrt{\frac{1}{{L}_{p}}} {\sum }_{l = 1}^{{L}_{p}} {c}_{l} a \left({θ}_{l}\right) ,$ where *Lₚ* denotes the number of propagation paths, *cₗ* ∼ 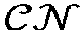 (0,1) is the complex path gain and ${θ}_{l} ∈ \left[-\frac{π}{2},\frac{π}{2}\right]$ is the AoD associated with the (*l*)-th propagation path.

The array steering vector of direction *θ* is given $a \left(θ\right) = \frac{1}{\sqrt{N}} {\left[1,{e}^{j 2 π \frac{d}{λ} sin \left(θ\right)},…,{e}^{j 2 π \frac{d}{λ} \left(N-1\right) sin \left(θ\right)}\right]}^{T} ,$ where d is the spacing between two adjacent antennas, and *λ* represents the carrier wavelength. N is the number of antennas.

In the **communication part** (receiver of the communication device), the received radar signal is regarded as interference, since it is unknown and meaningless to the communication device. The SINR at the communication device is expressed as $γ = \frac{{\left|{h}^{H}w\right|}^{2}}{{\sum }_{j = 1}^{{J}_{adaptive}} {\left|{h}^{H}{v}_{j}\right|}^{2} + {σ}^{2}} ,$ where *σ*² is the noise power at the communication device.

In the **radar sensing part** at the base station, the beamforming is expected to form a strong beam pattern pointing to potential target directions of interest, thus yielding a larger radar receive SNR and a better sensing performance. Mathematically, the beam pattern gain *p*(*θ*) at a specific angular direction, *θ*, can be calculated (estimated) as: $p \left(θ\right) = E \left\{{\left|{a}^{H}\left(θ\right)x\right|}^{2}\right\} = {a}^{H} \left(θ\right) \left(w{w}^{H}+{\sum }_{j = 1}^{{J}_{adaptive}} {v}_{j} {v}_{j}^{H}\right) a \left(θ\right) .$

Following the communication-centric design, an objective may be to maximize the energy efficiency of the communication device while guaranteeing the sensing requirement in terms of individual radar beam pattern gains. The system data rate is denoted by $R ≜ {log}_{2} \left(1+γ\right) ,$ and the total power consumption of the entire system is given as ${P}_{total} = \frac{1}{ρ} {\sum }_{j = 1}^{{J}_{adaptive}} {\left‖{v}_{j}\right‖}^{2} + \frac{1}{ρ} {\left‖w\right‖}^{2} + {P}_{c} + ξR ,$ where *ρ* ∈ (0,1] is the amplifier efficiency of the BS, *P*_{c} is the summation of static circuit powers consumed by the BS and the communication device (user equipment), and *ξR* represents the dynamic power with *ξ* > 0 denoting the dynamic power consumption per unit data rate. Thus, the system's energy efficiency can be expressed as *η*_{EE} and given by: ${η}_{EE} = \frac{R}{\frac{1}{ρ} {\sum }_{j = 1}^{{J}_{adaptive}} {\left‖{v}_{j}\right‖}^{2} + \frac{1}{ρ} {\left‖w\right‖}^{2} + {P}_{c} + ξR} .$ (Eq. 1)

An objective can be to jointly design the radar and communication beamforming, i.e., ${\left\{{v}_{j}\right\}}_{j = 1}^{{J}_{adaptive}}$ and w, at the BS to maximize *η*_{EE} under the individual SINR requirements for CU and the minimum beampattern gains towards sensing directions as the sensing performance.

By dividing the numerator and the denominator of *η*_{EE} by R in Equation (Eq. 1) and then omitting the *ξ*, the maximization of *η*_{EE} is equivalent to the maximization of *η'*_{EE}. ${maximize}_{w , {\left\{{v}_{j}\right\}}_{j = 1}^{{J}_{adaptive}}} η {′}_{EE} = \frac{R}{\frac{1}{ρ} {\sum }_{j = 1}^{{J}_{adaptive}} {\left‖{v}_{j}\right‖}^{2} + \frac{1}{ρ} {\left‖w\right‖}^{2} + {P}_{c}}$ (Eq. 2) subject to $γ \geq {γ}_{th} ,$ (Eq. 2a) $\begin{matrix}{\left‖w\right‖}^{2} + {\sum }_{j = 1}^{{J}_{adaptive}} {\left‖{v}_{j}\right‖}^{2} \leq {P}_{max} , \\ {a}^{H} \left({θ}_{m}\right) \left(w{w}^{H}+{\sum }_{j = 1}^{{J}_{adaptive}} {v}_{j} {v}_{j}^{H}\right) a \left({θ}_{m}\right) \geq {Γ}_{m} ,\end{matrix}$ (Eq. 2b) $m = 1 , … , {J}_{adaptive} .$ (Eq. 2c) where *γ*ₜₕ denotes the SINR requirement of the communication device, *θₘ* stands for the *m^{th}* target direction for radar sensing, and Γ*ₘ* is the corresponding lowest beam pattern gain for a successful sensing. The constraint (2a) gives the individual SINR requirements for the communication device, and (2b) denotes the transmit power constraint at the BS. The constraint (2c) denotes the minimum beam pattern gains towards sensing directions as the sensing performance.

The optimization problem (Eq. 2) is a non-convex fractional program that may be challenging to solve. By appropriately reformulating the problem and then applying techniques of successive convex approximation (SCA) and semidefinite relaxation (SDR), an iterative algorithm can be used to address this problem (see for example Z. He, W. Xu, H. Shen, Y. Huang, and H. Xiao, "Energy efficient beamforming optimization for integrated sensing and communication," IEEE Wireless Communications Letters, vol. 11, no. 7, pp. 1374-1378, 2022)*.*

Therefore, to solve problem (Eq. 2), as a first step, in this embodiment, the adaptive number **of** *J*_{adaptive} is found, corresponding to step 340 of the method 300. For example, the number *J*_{adaptive} of sensing beams is determined by: ${J}_{adaptive} = \frac{{d}_{t}}{{d}_{CU} + {d}_{buffer}}$ wherein *dₜ* indicates a range available for sensing determined based on the available power for sensing with ${d}_{t} = {d}_{CU} \sqrt{\frac{P}{{P}_{CU}}}$, d_{CU} is the distance from the access point (BS 410) to the location of the communication device, and d_{buffer} is a predetermined buffer coverage range. The value of d_{buffer} depends on the scenario. It can be any range value that determines how close to the users to sense the targets. A low buffer coverage range results in a higher number of *J*_{adaptive} and may cause more interference to the communication users or vice-versa. In the case of the mmWave environment, the buffer coverage range may be set, for instance, to *dₜ- d_{CU}* as a maximum to ensure the presence of at least one sensing or dedicated beam.

Expression ${d}_{t} = {d}_{CU} \sqrt{\frac{P}{{P}_{CU}}}$ represents a proportional relation between the transmit power *P* and the range *dₜ*. The transmit power is directly proportional to the square of the range. The distance to the communication device, *d_{CU},* and the required transmit power, *P_{CU}* are known. Then, based on these values and the remaining power for the sensing, the corresponding target range can be calculated. The number *J*_{adaptive} calculated as shown above may not be an integer. As is clear to those skilled in the art, rounding towards the closest larger integer (ceil) may be applied to obtain integer *J*_{adaptive}. In general, another kind of rounding operation (floor, round, or the like) may be applied alternatively.

It is noted that the above mentioned determination is only exemplary. In general, the number of sensing beams do not have to be determined based on the ratio of distances. It is possible to determine the number of beams based on the ratio of powers, namely the total power available for sensing and the power per sensing beam expected (e.g. based on the distance of the communication device and the assumption that the sensing targets would be located in the proximity). Similarly to d_{buffer}, a power margin may be defined. It is noted that there are other ways of roughly estimating (calculating the number of beams for sensing based on the knowledge of the communication device location and based on some base station parameters (available power, beamforming capabilities, etc) without any further assumptions.

It is further noted that while the above mentioned calculations provide the benefit of not requiring any additional information of the sensing targets (their location, their speed, their scattering properties, or the like), such parameters may be used for the estimation of the number of sensing beams and may improve accuracy of the estimation. Such additional parameters may be obtained for instance by target tracking, i.e. by storing information pertaining to the same target detected in the past.

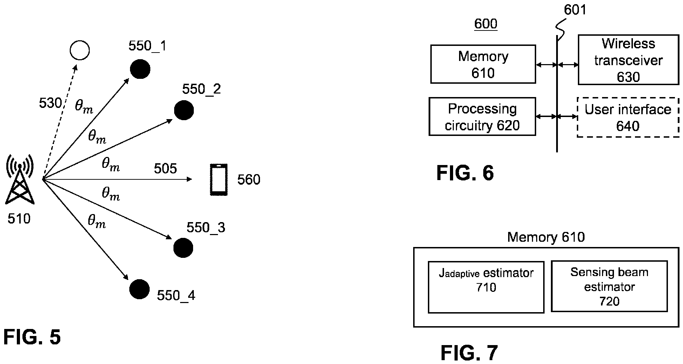

Irrespectively of the specific manner of deriving the number of sensing beams, in some exemplary implementations of the present disclosure, the determining 350 the sensing beams in the method 300 comprises distributing the number of sensing beams symmetrically around the communication beam with a predefined angle difference. An example of such symmetrical arrangement is shown in Fig. 5. A base station 510 has a LoS direction 505 towards a communication device 560. This LoS direction may be set to *θ*₀. Four sensing beams are distributed symmetrically around the LoS direction 505 towards hypothetical scatterers (sensing targets) 550_1, 550_2, 550_3, and 550_4. The example of Fig. 5 does not only show symmetrical distribution, but also regular distribution in which, there is the same angle difference *θ*ᵣₑₛₒₗᵤₜᵢₒₙ between each two beam directions including direction towards the communication device 560 and the directions towards the four scatterers 550_1, 550_2, 550_3, and 550_4. In case of one communication device, the sensing beams may be distributed in directions *θᵢ* and *θ*_{-*i*} around *θ*₀.(direction of the communication device) as follows: *θᵢ* = *θ*₀ *+ i* × *θ*ᵣₑₛₒₗᵤₜᵢₒₙ, $i = 1 , 2 , … , \frac{{J}_{adaptive}}{2}$ for one side (e.g. right side) and *θ*_{-*i*} = *θ*₀ - *i* × *θ*ᵣₑₛₒₗᵤₜᵢₒₙ, $i = 1 , 2 , … , \frac{{J}_{adaptive}}{2}$. In other words, *θ*ᵣₑₛₒₗᵤₜᵢₒₙ is an angle between each two (adjacent) beam directions. On the other hand, *θ*ₘ (in this example *θ*ₘ *ε* [*θ₋ᵢ*, *θ*ᵢ]) is the actual angle of the m-th sensing beam.

However, it is noted that the present disclosure is not limited to symmetrical and regular distribution as shown in Fig. 5. A symmetrical and regular distribution may also be achieved by not counting the communication beam for distribution and only requiring that there is the same angle difference *θ*ᵣₑₛₒₗᵤₜᵢₒₙ between each two sensing beam directions towards the four scatterers 550_1, 550_2, 550_3, and 550_4. This would result in the angle difference of *θ*ᵣₑₛₒₗᵤₜᵢₒₙ/2 between the communication beam (line of sight 505) and the two scattering beams respectively neighboring the communication beam (on its both sides). Such arrangement may be suitable in case sensing in the immediate proximity of the communication device is aimed.

For a symmetrical distribution it is advantageous if the number of sensing beams is an even number. In an exemplary implementation, if the *J*_{adaptive} determined as described above is rounded to the closest larger even number (in case it is not an even number already). However, the present disclosure is not limited to symmetrical distributions and an odd number of beams may be distributed substantially evenly (symmetrically) around the communication beam. The symmetry is somewhat disturbed by one sensing beam 530 being only on one side of the communication beam as shown in Fig. 5. It may be located in the same angle difference *θ*ᵣₑₛₒₗᵤₜᵢₒₙ from its closest sensing beam 550_1 as shown in Fig. 5, or it may be located in a different distance. Moreover, a symmetrical distribution is possible without even distribution of the sensing beams (and possibly communication beam). It is possible to design higher beam density in the proximity of the communication beam, and lower beam density farther from the communication beam (on both sides). Asymmetric arrangements are also possible, especially. These may be suitable, for instance, if some information concerning one or more of the sensing target is known (location, speed, or the like).

After determining such approximate sensing beam distribution, the determining of the sensing beams may comprise application of an iterative algorithm for maximizing energy efficiency, constrained on requirement on signal to interference and noise ratio, SINR, at the communication device, transmission power limitation at the access point, and/or minimum requirement on gains of the sensing beams. These constraints aim at ensuring that the target performance of the sensing and the communication is still satisfied.

The iterative algorithm may be a successive convex approximation as mentioned above. However, the present disclosure is not limited thereto and the determination of the sensing beams and the communication beam pattern may be performed by another implementation of solving the optimization problem (constrained energy efficiency optimization). It is also noted that the present disclosure is not limited to performing energy efficiency optimization. The sensing beams and/or the communication beams may be determined (in step 350) by applying another optimization criteria and/or function. For example, the optimization criteria/function can be communication centric design or sensing centric design or joint design. The objective can be maximizing the SINR of the communication devices/users, maximizing the secrecy rate, minimizing the beam pattern matching error, maximizing the radar output SNR, or maximizing the beam pattern gain at the target or a combination of two or more of these parameters.

It is noted that the method is applicable to one or more communication devices. Based on the threshold for SNR, the required transmit power of each communication device, *P_{CU}*, is calculated in such case. In the system, *Pₘₐₓ* is the maximum transmit power at the BS for the multiuser case as well. When there is more than one communication device in the system, zero-forcing (ZF) or another approach may be applied to determine the communication beam (communication beamforming vectors toward the respective multiple communication devices, and the power for these communication beams). The same remaining procedure can then be performed to obtain the adaptive number of sensing beams for each user or only one selected user.

The details of an algorithm to solve the problem (Eq. 2) are given in an exemplary Algorithm summarized and described below and based on energy efficiency beamforming optimization for an adaptive beamforming for ISAC system to find the *J*_{adaptive} and $w , {\left\{{v}_{j}\right\}}_{j = 1}^{{J}_{adaptive}}$.

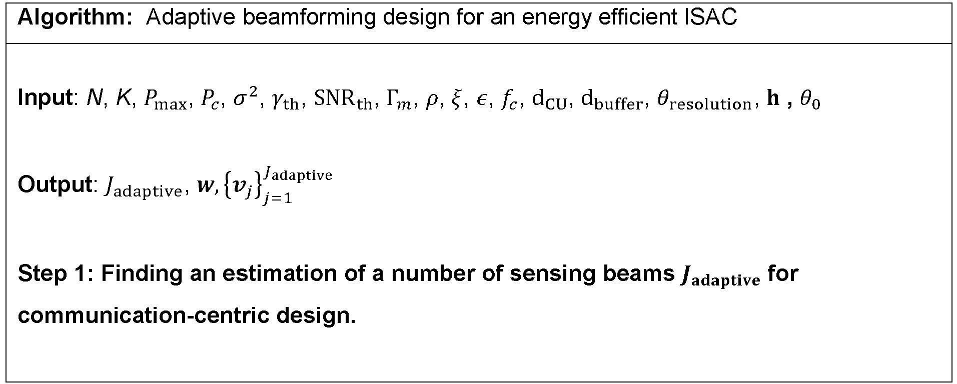

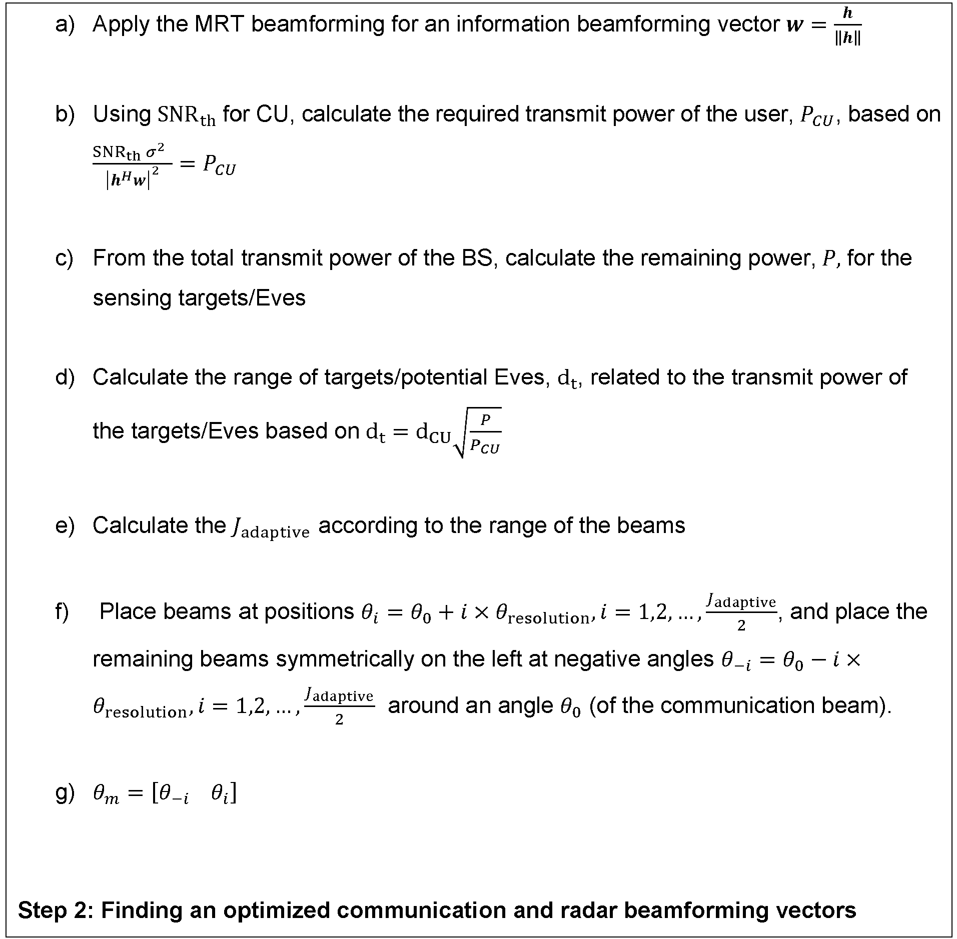

The inputs of the Algorithm are:
- *N* which denotes the number of all beams that can be formed (for both communication and sensing). *N* may be fixed in a system model and is the number of antennas in the ISAC base station. The number of *N* may be, for instance 8, 16, 64, or 256 or more, depending on the system (the number *N* does not have to be power of 2). The number of all beams can be smaller than or equal to the number of antennas, *N*, at the base station.
- *K* which denotes the number of users in the system.
- *Pₘₐₓ* which denotes the maximum power of the base station. The maximum power of the base station is a parameter given by the system and scenario under analysis.
- *P_{c}* which denotes a summation of static circuit powers consumed by the BS and the CU.
- *σ*² which denotes power of the noise at the communication device, which depends on the receiver's noise figure and bandwidth.
- *γ*ₜₕ which denotes the SINR requirement of the communication device.
- SNRₜₕ which denotes a Signal to Noise Ratio, SNR, threshold at the communication device.
- Γ*ₘ* which denotes a minimum gain requirement for the m-th sensing beam. Γ*ₘ* may be the same for all sensing beams or may be different.
- *ρ* which denotes an amplifier efficiency of the base station. The range of this parameter is *ρ* ∈ (0,1] and it is determined by characteristics of the power amplifier and the hardware implementation.
- *ξ* which denotes dynamic power consumption at the BS per unit data rate.
- *ε* is the convergence accuracy of the algorithm in optimization. It defines the stopping criterion for iterations in optimization. When the difference between successive iterations falls below epsilon, the algorithm considers the solution sufficiently optimized and stops further computations. For example, a value of 0.001 may be taken, or another desired target value.
- *f_{c}* which denotes carrier frequency on which the integrated sensing and communication signal is transmitted by the base station. It may be constrained by the frequence band in which the system is operating in that the ISAC is employed (e.g. 4G, 5G, 6G, WiFi, or the like).
- d_{CU} which denotes the distance to the communication device (from the base station). This parameter is determined by the base station, for instance by using channel estimation techniques to obtain the user channel/location. It may be determined in other ways e.g. involving additional location determination functionality or equipment.
- d_{buffer} which denotes a distance buffer, i.e. an inacuracy range assumed as described above.
- *θ*ᵣₑₛₒₗᵤₜᵢₒₙ which denotes the angle difference between two angles of neighboring beams within the ISAC signal. Its value may differ based on various beamforming capabilities of the access point (e.g. number of antennas, impacting the shape / precision of the beam). *θ*ᵣₑₛₒₗᵤₜᵢₒₙ can be determined, for example, depending on the system/scenario and can be any angular difference value that defines the range in which sensing beams are formed. Since the potential targets are searched near the CUs, the value of *θ*ᵣₑₛₒₗᵤₜᵢₒₙ is not selected so high.
- **h** which denotes channel response (also referred to as a channel vector) of the channel between the base station and the communication device. This parameter may be obtained by the base station performing channel estimation, for instance based on a fedback from the communication device.

It is noted that the typical value ranges and ways of obtaining the input parameters are merely exemplary and serve merely for illustration. For different scenarios and technologies, these values may vary. The present disclosure is not limited to any specific values, value ranges, or ways of obtaining the above mentioned parameters. In fact, the selection of the input parameters above is merely exemplary for the detailed illustrative implementation of the Algorithm. Other algorithms or optimization formulations are possible.

The outputs of the Algorithm are:
- *J*_{adaptive} which denotes the adaptive number (amount) of sensing beams to be transmitted, integrated with the communication beam (or more than one communication beams).
- w which denotes an information beamforming vector of length Nx1. Elements of the information beamforming vector specify the communication beams (weights to be applied to the respective antennas at the transmitter to generate the communication beams).
- ${\left\{{v}_{j}\right\}}_{j = 1}^{{J}_{adaptive}}$ which denotes a set of sensing beamforming vectors of length Nx1. The set comprises *J*_{adaptive} vectors. Elements of each sensing beamforming vector specify the sensing beams (weights to be applied to the respective antennas at the transmitter to generate the sensing beams).

In step 1 of the algorithm, the number of *J*_{adaptive} is determined as described above with reference to step 340 of the method 300 (as well as the preceding steps 310-330).

In sub-step a), the beam and the required transmit power for the communication device is determined by maximum ratio transmission, MRT, beamforming and by calculating said power for the communication device based on a target Signal to Noise, SNR, threshold. Specifically, MRT may be suitable specifically if there is one communication device in the system. It is noted that this does not necessarily mean that there is only a single one communication device in general in the system, but rather that the ISAC signal is only generated (integrated) for one single communication device using the same resources. There may be other communication devices served in different time and/or frequency resources.

For the case without sensing function, an exemplary optimal transmit signal design is to send one communication beam to a single-antenna user using MRT beamforming for obtaining an information beamforming vector $w = \frac{h}{\left‖h\right‖}$ This may be performed, for example as shown in C. Xu and S. Zhang, "Integrated Sensing and Communication Exploiting Prior Information: How Many Sensing Beams are Needed?," IEEE Int. Symp. on Information Theory (ISIT), 2024, pp. 2802-2807, doi: 10.1109/ISIT57864.2024.10619398*.* However, the present disclosure is not limited to this approach. Other approached may be more advantageous for the cases in which the communication device has more than one antennas. Any approach for determining a suitable beam (information beamforming vector) for one communication user in downlink may be applied.

If there are multiple users in the system so that their communication beams are to be integrated with one or more sensing beams, zero-forcing (ZF) may be applied instead of the MRT. The same following algorithm steps can then be performed to obtain the adaptive number of sensing beams. Moreover, in SINR calculation, the interference caused by the other communication users may be considered in addition to the received radar signal. For ZF, the precoding matrix is given as: $W = \sqrt{\frac{1}{tr \left({\left({H}^{H}H\right)}^{- 1}\right)}} H {\left({H}^{H}H\right)}^{- 1} ∈ {ℂ}^{N \times K} ,$ where $H = \left[{h}_{1}…..{h}_{K}\right] ∈ {ℂ}^{N \times K}$ with K being the number of users in the system and N being the number of antennas at the base station. The precoding matrix has the size of N x K. It includes the beamforming vectors: **W**=[**w**₁ **w**₂ ... **w**_{K}]. Also, the details are given in multiuser case at the end of this document. One exemplary related reference for ZF is Liao, H. Q. Ngo, M. Matthaiou and P. J. Smith, "Power Allocation for Massive MIMO-ISAC Systems," IEEE Trans. on Wireless Communications, vol. 23, no. 10, pp. 14232-14248, Oct. 2024, doi: 10.1109/TWC.2024.3410385*.*

In the Algorithm, after a beam (communication beamforming vector) for the communication device is determined by using the MRT beamforming, in step b), the required transmit power of the communication device to be used to transmit the communication beam is determined.

In this specific example, the required transmit power for the communication device *P_{CU}* is determined by $\frac{{SNR}_{th} {σ}^{2}}{{\left|{h}^{H}w\right|}^{2}} = {P}_{CU}$

With, as defined above, SNRₜₕ being the SNR threshold, and *σ*² being a noise power at the communication device. The determination may be performed without considering sensing function, designs. The required transmit power of the communication device is calculated here based on the SNRₜₕ and the communication beamforming vector calculated in step a) as well as based on the channel vector.

In step c), the remaining power, P, is calculated from the total transmit power of the BS. The remaining power is the power that may be used for sensing targets/possible Eves. As mentioned above, the power that can be allocated for sensing to the targets/potential Eves can be calculated by subtracting the required transmit power *P_{CU}* of the communication device (also referred to as communication user, CU) from the maximum transmit power of the BS denoted *Pₘₐₓ.* Here, the maximum transmit power of the BS corresponds to the available transmit power mentioned above.

In step d), the distance (the range of radar sensing), dt, of sensing targets/potential Eves is calculated, related to the transmit power of the targets/Eves and, more specifically, based on the relation ${d}_{t} = {d}_{CU} \sqrt{\frac{P}{{P}_{CU}}}$. As mentioned above, a certain distance buffer (distance uncertainty) may be (but does not have to be in which case d_{buffer}=0) considered in the calculation. In other words, the range of the radar sensing dt is determined based on the allocated power, i.e. the power allocated for target sensing.

In step e), the number of beams is calculated based on the range of radar sensing, dt, from step d) and based on the distance of the communication device, d_{CU}. In this exemplary implementation (according to the Algorithm) sensing targets/potential Eves near the communication device are of interest. Parameter d_{buffer} is a buffer coverage range of distance around the communication device. *J*_{adaptive} is then determined by ${J}_{adaptive} = \frac{{d}_{t}}{{d}_{CU} + {d}_{buffer}}$.

After obtaining the number of *J*_{adaptive}, in step f), the beam directions are distributed around the communication beam direction (LoS direction between the BS and the communication device). In this example, a half (*J*_{adaptive}/2) of the sensing beam direction are set to the left of the communication beam direction and the remaining half of the sensing beam directions is set to the right of the communication beam direction. The sensing beam directions on the sides around the communication beam direction as symmetrical. The angle interval for placing the beams (beam directions) is defined as *θ*ᵣₑₛₒₗᵤₜᵢₒₙ. Thus, the angle of each radar sensing beam is denoted by *θₘ, m* = 1,2, ...,*J*_{adaptive}. In the specific example of Fig. 5, the first half of the beams are placed at positions *θᵢ* = *θ*₀ *+ i* × *θ*ᵣₑₛₒₗᵤₜᵢₒₙ, $i = 1 , 2 , … , \frac{{J}_{adaptive}}{2}$, and the second half of the beams is placed symmetrically to the first half at negative angles *θ₋ᵢ* = *θ*₀ *- i* × *θ*ᵣₑₛₒₗᵤₜᵢₒₙ, $i = 1 , 2 , … , \frac{{J}_{adaptive}}{2}$, corresponding to step g).

In Step 2 of the Algorithm, optimized communication and radar beamforming vectors are obtained. In this specific example, the optimization problem (Eq. 2) is solved by SCA-Based Algorithm as explained above, or by any other convex algorithm to find optimized communication and radar beamforming vectors for the proposed adaptive ISAC system.

Specifically, the maximizing of the energy efficiency is formulated as follows: ${maximize}_{w , {\left\{{v}_{j}\right\}}_{j = 1}^{{J}_{adaptive}}} \frac{R}{\frac{1}{ρ} {\sum }_{j = 1}^{{J}_{adaptive}} {\left‖{v}_{j}\right‖}^{2} + \frac{1}{ρ} {\left‖w\right‖}^{2} + {P}_{c}}$ subject to $γ \geq {γ}_{th} ,$ ${\left‖w\right‖}^{2} + {\sum }_{j = 1}^{{J}_{adaptive}} {\left‖{v}_{j}\right‖}^{2} \leq {P}_{max} ,$ ${a}^{H} \left({θ}_{m}\right) \left(w{w}^{H}+{\sum }_{j = 1}^{{J}_{adaptive}} {v}_{j} {v}_{j}^{H}\right) a \left({θ}_{m}\right) \geq {Γ}_{m} ,$ $m = 1 , … , {J}_{adaptive} .$ where *γ*ₜₕ denotes the SINR requirement of the communication device; *θₘ* stands for a direction of the *m^{th}* sensing beam; and Γ*ₘ* is the corresponding minimum gain requirement for the sensing beam; $w ∈ {ℂ}^{N \times 1}$ denotes the information beamforming vector; ${v}_{j} ∈ {ℂ}^{N \times 1}$ is a beamforming vector of the j *^{th}* sensing beam; ***a***(*θ*) is an array steering vector of direction *θ*; *Pₘₐₓ* is maximum power of the access point, *ρ* ∈ (0,1] is an amplifier efficiency of the access point; R is system data rate; and *P*_{c} is an estimate of static circuit power consumed by the access point and by the communication device.

The solution to the optimization problem are the optimized information beamforming vector(s) and the sensing beamforming vectors.

Unlike some known approaches, the above described framework is capable of considering the absence of prior distribution information for target locations and emphasizes an adaptive approach to the number of dedicated and sensing beams based on the location of communication devices and system requirements. The focus is on sensing targets near to the communication devices that pose potential eavesdropping risks. By optimizing the adaptive number of sensing beams based on the location of communication devices and adopting a communication-centric design that maximizes the energy efficiency, the proposed adaptive scheme increases the energy efficiency compared to the conventional scheme while maintaining the sensing performance, providing insights into adaptive beamforming strategies for the joint design of the transmitted ISAC signal.

The above described ISAC beamforming may be performed at an ISAC access point. Fig. 6 shows an exemplary structure 600 of such access point. In particular, according to an embodiment, an access point is provided for determining adaptively number of sensing beams in joint sensing and communication. The access point 600 comprises processing circuitry 620. The access point may be a scheduling device that schedules multiple communication and/or multiple target sensing transmissions. Such transmissions are ISAC transmissions that may use different beams within the same time and/or frequency resource units of an ISAC system (such as system 200 of Fig. 2 or system 400 or Fig. 4 or the like). The processing circuitry 620 may be configured to perform the communication-centric sensing beam determination as described above and exemplified e.g. with reference to the Algorithm.

Specifically, the processing circuitry 620 may embed functional units shown in Fig. 7. These functional units comprise an estimator of the number of sensing beams (*J*_{adaptive} estimator) 710 and a sensing beam estimator 720. The *J*_{adaptive} estimator 710 is configured to obtain a communication beam for a communication device according to the location of the communication device and obtain available transmit power. Moreover, the processing circuitry is configured to determine power available for sensing which is not greater than a difference between the available transmit power and power of the communication beam; and then determine a number of sensing beams while sharing the power available for sensing. The sensing beam estimator 720 is configured to determine the sensing beams (the sensing beamforming vectors).

The access point 600 may further comprise a wireless transceiver 630 configured to transmit or receive signals. The transceiver may be controlled (configured) by the processing circuitry 630 to transmit the resulting ISAC beams. Specifically, the transceiver is configured to transmit the determined (by the processing circuitry) communication beam and the sensing beams jointly. The transceiver may include a front end with one or more amplifier stages, up-conversion from the baseband processing to the target frequency band, or the like. The transceiver may further comprise a plurality of antennas for transmitting the ISAC signal. However, it is noted that the access point does not necessarily include the antennas and the corresponding front end processing chains. These may be externally connectable. In such case, the access point may comprise an interface with ports for connecting external antennas and/or front end(s).

As is illustrated in Fig. 6, the access point 600 may further comprise a bus 601 over which the processing circuitry 620 may communicate with the transceiver 630 and possible other components. The possible other components may include a memory 610. The memory may store program code, which when executed on the processing circuitry 620, configures the processing circuitry to perform the functions as mentioned above.

The processing circuitry 620 may communicate with the memory over the bus 601. It is noted that Fig. 6 is simplified. The processing circuitry may include one or more processors and/or programmable hardware or application specific hardware which may be integrated on one chip or separated. The memory may be integrated on a chip together with the processing circuitry 620 or with one or more of its portions; or the memory 610 may be integrated separately from the processing circuitry 620. The memory 610 may be a volatile memory or a non-volatile memory. The access point 600 may further comprise a user interface 640 enabling a user to enter some parameters and/or to obtain state of the device 600. However, such user interface is not necessary for operation of the device 600.

It is noted that the device 600 is only exemplary. The present disclosure is not limited to any particular device structure. Correspondingly, methods are provided that include steps described herein as performed by some particular modules of the device 600. The present disclosure is not limited to any particular standardized device 600 (such as 5G, 6G, or WiFi device) and may also be implemented in proprietary communication and sensing systems.

The access point implementations corresponding to the methods described herein and the methods may be readily implemented in future systems such as WiFi 7 and higher and/or in 6G. The rise of 6G applications has driven the need for systems integrating high data rate communication with accurate sensing. ISAC has emerged as a promising solution, enabling dual functionality while enhancing spectral and energy efficiency through shared resources. Most of existing studies consider conventional schemes with a fixed number of sensing beams at most the number of base station (BS) antennas, which may lead to unnecessary interference to communication devices and excessive power consumption. The present disclosure addresses the challenge of enabling maximization of the energy efficiency in ISAC systems while balancing communication and accurate sensing.

### Example for multiple communication users

The one-communication user ISAC system can be extended to a multiuser ISAC system. The above-described algorithm is also applicable to the multiple users case as exemplified below. In particular, based on a threshold for SNR, the required transmit power of each communication device (user), P_{CU}, is calculated. In the system, *Pₘₐₓ* is the maximum transmit power at the BS for the multiuser case, as described above. When there is more than one user in the system, zero-forcing (ZF) may be applied to obtain the beamforming vectors for the respecive communication users, and otherwise the same procedure can be performed to obtain the adaptive number of sensing beams for each user or only one selected user, as is descriced above. In the following we provide one possible example of handling multiple communication users.

Consider K single-antenna users in the ISAC system. Thus, the transmitted signal vector can be rewritten as $x = {\sum }_{k = 1}^{K} {w}_{k} {s}_{k} + {\sum }_{j = 1}^{{J}_{adaptive}} {v}_{j} {s}_{j}^{r} ,$

Here, *sₖ* represents the information symbol for the *k^{th}* communication device, such that $E \left[{\left|{s}_{k}\right|}^{2}\right] = 1$, for *k*=*1,2,* ..., *K.* ${w}_{k} ∈ {ℂ}^{N \times 1}$ denotes the information beamforming vector for the *k^{th}* communication device and ∥***w**ₖ*∥² = *Pₖ*, where *Pₖ* is the transmit power of each *k^{th}* communication device. ${v}_{j} ∈ {ℂ}^{N \times 1}$ gives the *j^{th}* radar beamforming vector, and ${\sum }_{j = 1}^{{J}_{adaptive}} {\left‖{v}_{j}\right‖}^{2} = P$, where P denotes the total transmit power of sensing targets. ${s}_{j}^{r}$ is the *j^{th}* independent radar signal and $E \left[{\left|{s}_{j}^{r}\right|}^{2}\right] = 1$, for j=*1,2, ..., J*_{adaptive}, which is also independent of s.

A mmWave (millimeter wave) channel vector from the BS 410 to the communication device 460, according to N. Su, F. Liu, and C. Masouros, "Secure integrated sensing and communication systems with the assistance of sensing functionality," in 31st EUSIPCO, 2023, pp. 690-694*,* can be denoted by ${h}_{k} ∈ {ℂ}^{N \times 1}$ and is defined as ${h}_{k} = \sqrt{{PL}_{k}} \sqrt{N} \left(\sqrt{\frac{{v}_{k}}{{v}_{k} + 1}}{h}_{L , k}^{LoS}+\sqrt{\frac{1}{{v}_{k} + 1}}{h}_{S , k}^{NLoS}\right) ,$ where *PLₖ* denotes the large-scale fading factor (pathloss) for the k-th communication user. Symbol *vₖ* > 0 is the Rician K-factor of the communication user *k*. ${h}_{L , k}^{LoS} = a \left({θ}_{k , 0}\right)$ is the Line of Sight (LoS) deterministic component. Vector ***a***(*θ*_{k,0}) denotes the array steering vector, where ${θ}_{k , 0} ∈ \left[-\frac{π}{2},\frac{π}{2}\right]$ is the angle of departure (AoD) of the LoS component from the BS to the communication user k. The scattering (Non-Line-of-Sight, NLoS) component ${h}_{S , k}^{NLoS}$ can be expressed as ${h}_{S , k}^{NLoS} = \sqrt{\frac{1}{{L}_{p}}} {\sum }_{l = 1}^{{L}_{p}} {c}_{k , l} a \left({θ}_{k , l}\right) ,$ where *Lₚ* denotes the number of propagation paths, *c_{k,l} ∼* 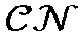 (0,1) is the complex path gain and ${θ}_{k , l} ∈ \left[-\frac{π}{2},\frac{π}{2}\right]$ is the AoD associated with the (*k, l*)-th propagation path.

The SINR at the communication device is expressed as ${γ}_{k} = \frac{{\left|{h}_{k}^{H}{w}_{k}\right|}^{2}}{{\sum }_{j = 1 , j \neq k}^{K} {\left|{h}_{k}^{H}{w}_{j}\right|}^{2} + {\sum }_{j = 1}^{{J}_{adaptive}} {\left|{h}_{k}^{H}{v}_{j}\right|}^{2} + {σ}_{k}^{2}} ,$ where ${σ}_{k}^{2}$ is the noise power at the communication device k.

The beam pattern gain *p*(*θ*) at a specific angular direction, *θ*, can be calculated (estimated) as: $p \left(θ\right) = E \left\{{\left|{a}^{H}\left(θ\right)x\right|}^{2}\right\} = {a}^{H} \left(θ\right) \left({\sum }_{k = 1}^{K} {w}_{k} {w}_{k}^{H}+{\sum }_{j = 1}^{{J}_{adaptive}} {v}_{j} {v}_{j}^{H}\right) a \left(θ\right) .$

The system data rate is denoted by $R ≜ {\sum }_{k = 1}^{K} {log}_{2} \left(1+{γ}_{k}\right) ,$ and the total power consumption of the entire system is given as ${P}_{total} = \frac{1}{ρ} {\sum }_{k = 1}^{K} {\left‖{w}_{k}\right‖}^{2} + \frac{1}{ρ} {\sum }_{j = 1}^{{J}_{adaptive}} {\left‖{v}_{j}\right‖}^{2} + {P}_{c} + ξR ,$

Thus, the system's energy efficiency can be expressed as *η*_{EE} and given by: ${η}_{EE} = \frac{R}{\frac{1}{ρ} {\sum }_{k = 1}^{K} {\left‖{w}_{k}\right‖}^{2} + \frac{1}{ρ} {\sum }_{j = 1}^{{J}_{adaptive}} {\left‖{v}_{j}\right‖}^{2} + {P}_{c} + ξR} .$ (Eq. 3)

An objective can be to jointly design the radar and communication beamforming, i.e., ${\left\{{v}_{j}\right\}}_{j = 1}^{{J}_{adaptive}}$ and ${\left\{{w}_{k}\right\}}_{k = 1}^{K}$, at the BS to maximize *η*_{EE} under the individual SINR requirements for CUs and the minimum beam pattern gains towards sensing directions as the sensing performance.

By dividing the numerator and the denominator of *η*_{EE} by R in Equation (Eq. 3) and then omitting the *ξ*, the maximization of *η*_{EE} is equivalent to the maximization of *η'*_{EE}. ${maximize}_{{\left\{{w}_{k}\right\}}_{k = 1}^{K} , {\left\{{v}_{j}\right\}}_{j = 1}^{{J}_{adaptive}}} η {′}_{EE} = \frac{R}{\frac{1}{ρ} {\sum }_{k = 1}^{K} {\left‖{w}_{k}\right‖}^{2} + \frac{1}{ρ} {\sum }_{j = 1}^{{J}_{adaptive}} {\left‖{v}_{j}\right‖}^{2} + {P}_{c}}$ (Eq. 4) subject to ${γ}_{k} \geq {γ}_{th , k} ,$ (Eq. 4a) $\begin{matrix}{\sum }_{k = 1}^{K} {\left‖{w}_{k}\right‖}^{2} + {\sum }_{j = 1}^{{J}_{adaptive}} {\left‖{v}_{j}\right‖}^{2} \leq {P}_{max} , \\ {a}^{H} \left({θ}_{m}\right) \left({\sum }_{k = 1}^{K} {w}_{k} {w}_{k}^{H}+{\sum }_{j = 1}^{{J}_{adaptive}} {v}_{j} {v}_{j}^{H}\right) a \left({θ}_{m}\right) \geq {Γ}_{m} ,\end{matrix}$ (Eq. 4b) $m = 1 , … , {J}_{adaptive} .$ (Eq. 4c) where *γ*_{th,k} denotes the SINR requirement of user k.

Correspondingly, below an exemplary algorithm for the multi-user case is provided.

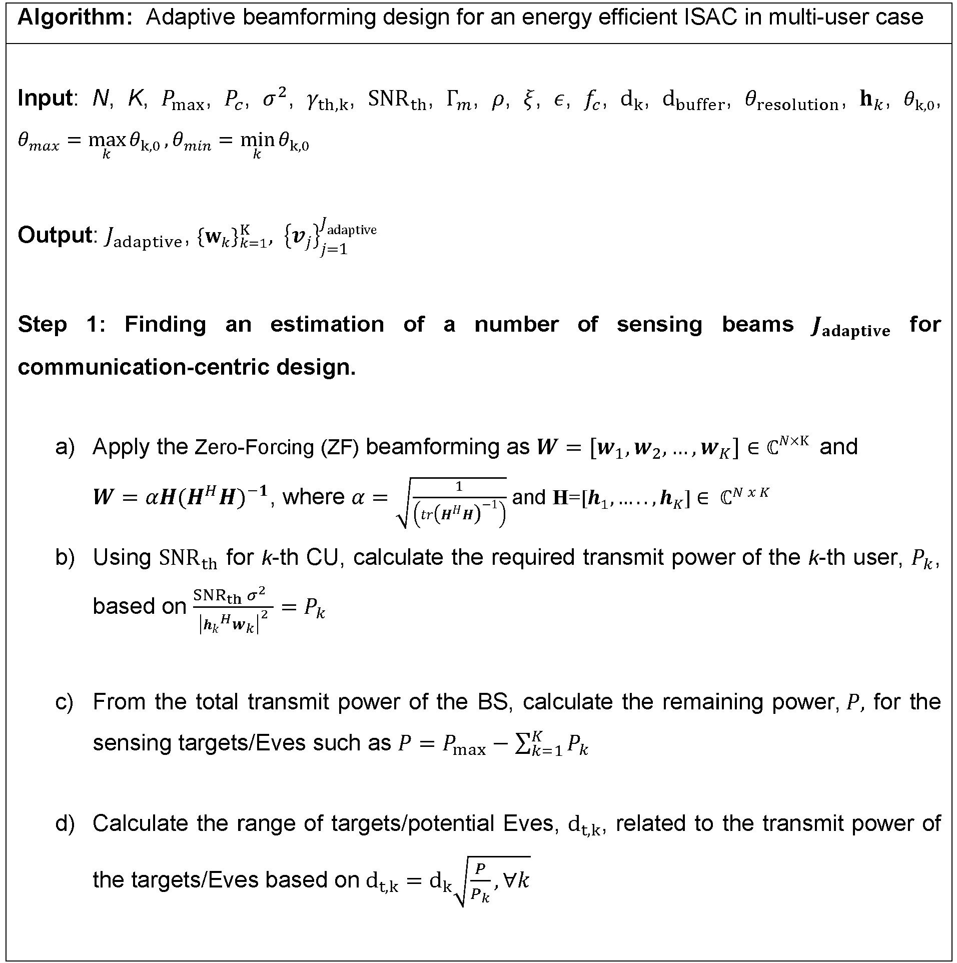

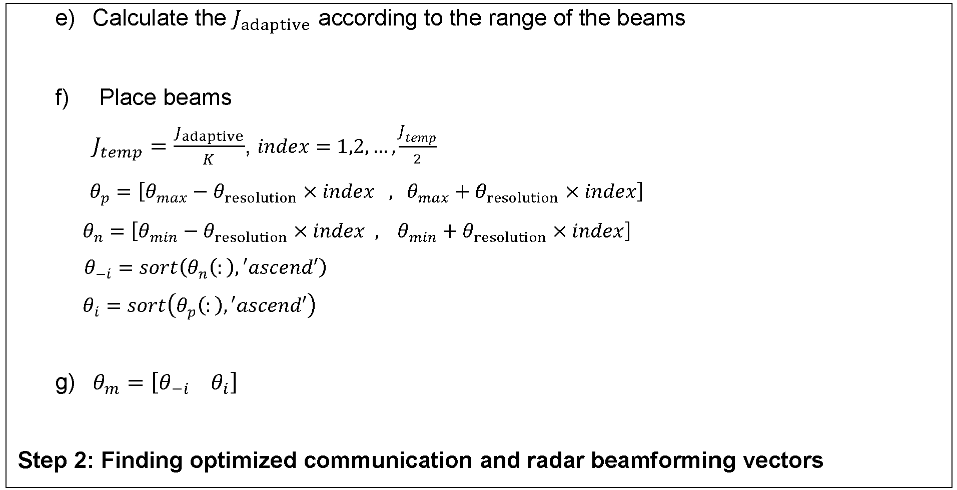

Here, for item e), the number *J*_{adaptive} of sensing beams is determined by: ${J}_{adaptive} = \frac{{min}_{k} \left({d}_{t , k}\right)}{{min}_{k} \left({d}_{k}\right) + {d}_{buffer}}$ wherein *d_{t,k}* indicates a range available for sensing determined based on obtained transmit power P available for sensing with ${d}_{t , k} = {d}_{k} \sqrt{\frac{P}{{P}_{k}} , ∀ k}$, dₖ being the distance from the access point (BS 410) to obtained location of the k-th communication device, and d_{buffer} is a predetermined buffer coverage range. The symbol "min" denotes minimum, which is calculated over the communication devices (users) *k=1..K.*

Concerning the sensing beam placing, any placing may be performed and the above-mentioned examples and considerations apply. For instance, may be advantageous to place the beams substantially regularly with similar or same angle distances.

An exemplary placing mentions in the algorithm above at first calculates the number of sensing beams *Jₜₑₘₚ* to be placed in the vicinity of each respective communication beam. This may be done by dividing the *J*_{adaptive} by the number of communication devices (users) K. Since the result of the division may not be an integer, the result of the division may be rounded. For example, the floor operation may be used (rounding to the closest smaller integer) or another rounding operation. Moreover, it may be desirable in some implementations to obtain an even number *Jₜₑₘₚ*, so that a rounding towards e.g. the smallest next even integer may be performed or the like. However, this is only an option for the scenario in which the symmetric arrangement of sensing beams is desired around each communication beam as exemplified in the following.

Then, index of the beams on a one (positive and/or negative) side of the communication beam is determined as index=1, 2 ,..., *Jₜₑₘₚ*/2*.*

Then the angles *θₚ* of the sensing beams on one side and angles *θₙ* on the other side of the angle range around *θₘᵢₙ* and *θₘₐₓ* (in horizontal plane) can be expressed as: ${θ}_{p} = \left[{θ}_{max}-{θ}_{resolution}\times index, {θ}_{max}+{θ}_{resolution}\times index\right]$ ${θ}_{n} = \left[{θ}_{min}-{θ}_{resolution}\times index, {θ}_{min}+{θ}_{resolution}\times index\right]$ with ${θ}_{max} = {max}_{k} {θ}_{k , 0}$ defining the maximum angle of departure (AoD) of the LoS component from the BS to the communication user among all communication users and ${θ}_{min} = {min}_{k} {θ}_{k , 0}$ defining defining the minimum AoD of the LoS component from the BS to the communication user among all communication users.

Correspondingly, the sensing beams may be obtained by sorting, in an ascendent manner, thus the angles at positive/right and negative/left side of the communication beams such as *θₚ*(: ) and *θₙ*(: ) are sorted as in *θᵢ* and *θ*_{-*i*}, respectively. Notation ( : ) defines here explicitely the vector form.

Correspondigly, the sensing beams for all K users may be obtained by sorting, in an ascendent manner, the angles *θₚ*(: ) and *θₙ*(: ): ${θ}_{- i} = sort \left({θ}_{n}\left(:\right),′ascend′\right)$ ${θ}_{i} = sort \left({θ}_{p}\left(:\right),′ascend′\right)$

It is noted that the above algorithm is only exemplary and that variations are possible as also discussed for the single communication user case. Moreover, the minimum may be replaced by a different function or may be skipped and instead values of a predefined communication user may be used.

### Implementations in software and hardware

It is noted that although embodiments and examples of the present disclosure were provided in terms of a method above, the corresponding devices (access points) providing the functionality described by the methods are also provided. Moreover, it is noted that any of the steps described above may be included as code instructions in a program, which may be executed by one or more processors.

The methodologies described herein may be implemented by various means depending upon the application. For example, these methodologies may be implemented in hardware, operation system, firmware, software, or any combination of two or all of them. For a hardware implementation, any processing circuitry may be used, which may include one or more processors. For example, the hardware may include one or more of application specific integrated circuits (ASICs), digital signal processors (DSPs), digital signal processing devices (DSPDs), programmable logic devices (PLDs), field programmable gate arrays (FPGAs), processors, controllers, any electronic devices, or other electronic circuitry units or elements designed to perform the functions described above.

If implemented as program code, the functions performed by the transmitting apparatus (device) may be stored as one or more instructions or code on a non-transitory computer readable storage medium. The computer-readable media includes physical computer storage media, which may be any available medium that can be accessed by the computer, or, in general by the processing circuitry. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc or the like. Combinations of different storage media are also possible - in other words, distributed and heterogeneous storage may be employed.

The above examples are not to limit the present disclosure. There are many modifications and configurations, which may be used in addition or alternatively. This present disclosure can be used in any kind of device that is receiving signals over a wireless channel. The embodiments and exemplary implementations mentioned above show some non-limiting examples. It is understood that various modifications may be made without departing from the claimed subject matter. For example, modifications may be made to adapt the examples to new systems and scenarios without departing from the central concept described herein.

### Selected embodiments and examples

Summarizing, embodiments of the present disclosure relatet to methods and apparatuses for determining adaptively the number of sensing beams in a joint communication and sensing access point (base station). A communication beam is obtained for a communication device according to location of the communication device. The transmit power for the communication user is obtained. The power available for sensing is then determined, and it is not greater than a difference between the power available at the access point and power of the communication beam. Then, a number of sensing beams is determined while sharing the power available for sensing; and the sensing beams are allocated correspondingly.

According to a first aspect, a method is provided for determining adaptively the number of sensing beams in a joint communication and sensing access point, comprising: obtaining one or more communication beams for respective one or more communication devices according to locations of the respective communication devices; obtaining an available transmit power; determining power available for sensing which is not greater than a difference between the available transmit power and power of the one or more communication beams; determining a number of sensing beams while sharing the power available for sensing; and determining the sensing beams.

According to a second aspect, further to the first aspect, the determining of the number of sensing beams is performed according to the power available for sensing and distance from the access point to said locations of the one or more communication devices.

According to a third aspect, further to the second aspect, the number *J*_{adaptive} of sensing beams is determined by using: ${J}_{adaptive} = \frac{{d}_{t}}{{d}_{CU} + {d}_{buffer}}$ wherein dt indicates a range available for sensing determined based on said power P available for sensing with ${d}_{t} = {d}_{CU} \sqrt{\frac{P}{{P}_{CU}}}$, d_{CU} is the distance from the access point to said locations of the one or more communication devices and d_{buffer} is a predetermined buffer coverage range.

According to a fourth aspect, further to any of the first to third aspect, said determining the sensing beams comprises distributing said number of sensing beams symmetrically around the one or more communication beams with a predefined angle difference.

According to a fifth aspect, further to the fourth aspect, the sensing beams are distributed with the same angular interval.

According to a sixth aspect, further to any of the first to fifth aspect, the number *J*_{adaptive} of sensing beams is determined to be an even integer.

According to a seventh aspect, further to any of the first to sixth aspect, the determining the sensing beams comprises application of an iterative algorithm for maximizing energy efficiency, constrained on requirement on signal to interference and noise ratio, SINR, at the communication device, transmission power limitation at the access point, and minimum requirement on gains of the sensing beams.

According to an eighth aspect, further to the seventh aspect, the maximizing energy efficiency is defined as follows: ${maximize}_{w , {\left\{{v}_{j}\right\}}_{j = 1}^{{J}_{adaptive}}} \frac{R}{\frac{1}{ρ} {\sum }_{j = 1}^{{J}_{adaptive}} {\left‖{v}_{j}\right‖}^{2} + \frac{1}{ρ} {\left‖w\right‖}^{2} + {P}_{c}}$ subject to $γ \geq {γ}_{th} ,$ ${\left‖w\right‖}^{2} + {\sum }_{j = 1}^{{J}_{adaptive}} {\left‖{v}_{j}\right‖}^{2} \leq {P}_{max} ,$ ${a}^{H} \left({θ}_{m}\right) \left(w{w}^{H}+{\sum }_{j = 1}^{{J}_{adaptive}} {v}_{j} {v}_{j}^{H}\right) a \left({θ}_{m}\right) \geq {Γ}_{m} ,$ $m = 1 , … , {J}_{adaptive} .$ where *γ*ₜₕ denotes the SINR requirement of the communication device; *θₘ* stands for a direction of the *m^{th}* sensing beam; and Γ*ₘ* is the corresponding minimum gain requirement for the sensing beam; $w ∈ {ℂ}^{N \times 1}$ denotes the information beamforming vector; ${v}_{j} ∈ {ℂ}^{N \times 1}$ is a beamforming vector of the j *^{th}* sensing beam; ***a***(*θ*) is an array steering vector of direction *θ*; *Pₘₐₓ* is maximum power of the access point, *ρ* ∈ (0,1] is an amplifier efficiency of the access point; R is system data rate; and *P*_{c} is an estimate of static circuit power consumed by the access point and by the communication device.

According to a ninth aspect, further to the seventh or eighth aspect, the iterative algorithm is successive convex approximation.

According to a tenth aspect, further to any of the first to ninth aspect, the beam and the power for the communication device are determined by maximum ratio transmission, MRT, beamforming and by calculating said required transmit power for the communication device based on a Signal to Noise, SNR, threshold.

According to an eleventh aspect, further to the tenth aspect, the beam for the communication device is defined by an information beamforming vector **w = *h*** / **∥*h*∥,** with ***h*** being a channel vector, and the required transmit power for the communication device *P_{CU}* is determined by $\frac{{SNR}_{th} {σ}^{2}}{{\left|{h}^{H}w\right|}^{2}} = {P}_{CU}$ with SNRₜₕ being said SNR threshold, and *σ*² being a noise power at the communication device.

According to a twelfth aspect, further to any of the first to eleventh aspect, the method is repeated periodically or in an event triggered manner based on change of the locations of the one or more communication devices or change of channel conditions at the communication device.

According to a 13-th aspect, further to any of the first to twelfth aspect, the beams for a plurality of communication devices are determined by zero-forcing.

According to a 14-th aspect, a computer program is provided, stored on a non-transitory medium comprising code instructions which when executed on one or more processors cause the one or more processors to perform the steps of any of the first to 13-th aspect.

According to a 15-th aspect, an access point is provided for determining adaptively a number of sensing beams for joint sensing and communication, the access point comprising processing circuitry and a transceiver. The processing circuitry is configured to: obtain one or more communication beams for respective one or more communication devices according to locations of the communication devices; obtain the available transmit power; determine power available for sensing which is not greater than a difference between the available transmit power and power of the one or more communication beams; determine a number of sensing beams while sharing the power available for sensing; and determine the sensing beam. The transceiver is configured to transmit the communication beam and the sensing beams jointly.

According to further aspects, the processing circuitry is configured to perform features of any (one or more) of the second to 13-th aspects.

According to an aspect, the processing circuitry is provided in a form of an integrated circuit.

## Claims

1. A method for determining adaptively the number of sensing beams in a joint communication and sensing access point, comprising:
obtaining one or more communication beams for respective one or more communication devices according to locations of the respective communication devices;
obtaining an available transmit power;
determining power available for sensing which is not greater than a difference between the available transmit power and power of the one or more communication beams;
determining a number of sensing beams while sharing the power available for sensing; and
determining the sensing beams.

2. The method according to claim 1, wherein the determining of the number of sensing beams is performed according to the power available for sensing and distance from the access point to said locations of the one or more communication devices.

3. The method according to claim 2, wherein the number *J*_{adaptive} of sensing beams is determined by using: ${J}_{adaptive} = \frac{{d}_{t}}{{d}_{CU} + {d}_{buffer}}$ wherein dt indicates a range available for sensing determined based on said power P available for sensing with ${d}_{t} = {d}_{CU} \sqrt{\frac{P}{{P}_{CU}}}$, d_{CU} is the distance from the access point to said locations of the one or more communication devices and d_{buffer} is a predetermined buffer coverage range.

4. The method according to any of claims 1 to 3, wherein said determining the sensing beams comprises distributing said number of sensing beams symmetrically around the one or more communication beams with a predefined angle difference.

5. The method according to claim 4, wherein the sensing beams are distributed with the same angular interval.

6. The method according to any of claims 1 to 5, wherein the number *J*_{adaptive} of sensing beams is determined to be an even integer.

7. The method according to any of claims 1 to 6, wherein the determining the sensing beams comprises application of an iterative algorithm for maximizing energy efficiency, constrained on requirement on signal to interference and noise ratio, SINR, at the communication device, transmission power limitation at the access point, and minimum requirement on gains of the sensing beams.

8. The method according to claim 7, wherein the maximizing energy efficiency is defined as follows: ${maximize}_{w , {\left\{{v}_{j}\right\}}_{j = 1}^{{J}_{adaptive}}} \frac{R}{\frac{1}{ρ} {\sum }_{j = 1}^{{J}_{adaptive}} {\left‖{v}_{j}\right‖}^{2} + \frac{1}{ρ} {\left‖w\right‖}^{2} + {P}_{c}}$ subject to $γ \geq {γ}_{th} ,$ ${\left‖w\right‖}^{2} + {\sum }_{j = 1}^{{J}_{adaptive}} {\left‖{v}_{j}\right‖}^{2} \leq {P}_{max} ,$ ${a}^{H} \left({θ}_{m}\right) \left(w{w}^{H}+{\sum }_{j = 1}^{{J}_{adaptive}} {v}_{j} {v}_{j}^{H}\right) a \left({θ}_{m}\right) \geq {Γ}_{m} ,$ $m = 1 , … , {J}_{adaptive} .$ where *γ*ₜₕ denotes the SINR requirement of the communication device; *θₘ* stands for a direction of the *m^{th}* sensing beam; and Γ*ₘ* is the corresponding minimum gain requirement for the sensing beam; $w ∈ {ℂ}^{N \times 1}$ denotes the information beamforming vector; ${v}_{j} ∈ {ℂ}^{N \times 1}$ is a beamforming vector of the j *^{th}* sensing beam; ***a***(*θ*) is an array steering vector of direction *θ*; *P*ₘₐₓ is maximum power of the access point, *ρ* ∈ (0,1] is an amplifier efficiency of the access point; R is system data rate; and *P*_{c} is an estimate of static circuit power consumed by the access point and by the communication device.

9. The method according to claim 7 or 8, wherein the iterative algorithm is successive convex approximation.

10. The method according to any of claims 1 to 9, wherein the beam and the power for the communication device are determined by maximum ratio transmission, MRT, beamforming and by calculating said required transmit power for the communication device based on a Signal to Noise, SNR, threshold.

11. The method according to claim 10, wherein
the beam for the communication device is defined by an information beamforming vector **w = *h*** / **∥*h*∥,** with ***h*** being a channel vector, and
the required transmit power for the communication device *P_{CU}* is determined by $\frac{{SNR}_{th} {σ}^{2}}{{\left|{h}^{H}w\right|}^{2}} = {P}_{CU}$
with SNRₜₕ being said SNR threshold, and *σ*² being a noise power at the communication device.

12. The method according to any of claims 1 to 11, repeated periodically or in an event triggered manner based on change of the locations of the one or more communication devices or change of channel conditions at the communication device.

13. The method according to any of claims 1 to 12, wherein the beams for a plurality of communication devices are determined by zero-forcing.

14. A computer program stored on a non-transitory medium comprising code instructions which when executed on one or more processors cause the one or more processors to perform the steps of any of claims 1 to 13.

15. An access point determines adaptively the number of sensing beams for joint sensing and communication, the access point comprising:
processing circuitry configured to:
obtain one or more communication beams for respective one or more communication devices according to locations of the communication devices;
obtain the available transmit power;
determine power available for sensing which is not greater than a difference between the available transmit power and power of the one or more communication beams;
determine a number of sensing beams while sharing the power available for sensing; and
determine the sensing beams, and
a transceiver for transmitting the communication beam and the sensing beams jointly.
